# FASCICULE DE BREVET EUROPEEN

(11) **EP 1 954 563 B1**
(45) Date de publication et mention de la délivrance du brevet: **24.12.2008**
(21) Numéro de dépôt: 06808280.9
(22) Date de dépôt: 05.09.2006
(51) Int. Cl.: B64D 27/20, B64C 27/02, B64C 5/06

(54) **TURBOREACTEUR POUR AERONEF, AERONEF MUNI D'UN TEL TURBOREACTEUR, ET PROCEDE DE MONTAGE D'UN TEL TURBOREACTEUR SUR UN AERONEF**
TURBOJET FÜR FLUGZEUG, MIT SOLCH EINEM TURBOJET AUSGESTATTETES FLUGZEUG UND VERFAHREN ZUR BEFESTIGUNG SOLCH EINES TURBOJETS AN EINEM FLUGZEUG
TURBOJET FOR AIRCRAFT, AIRCRAFT EQUIPPED WITH SUCH A TURBOJET, AND METHOD FOR MOUNTING SUCH A TURBOJET ON AN AIRCRAFT

(30) Priorité: 23.09.2005 FR 0552830
(43) Date de publication de la demande: 13.08.2008
(73) Titulaire: AIRBUS France, 31060 Toulouse Cedex 9 (FR)
(72) Inventeur: GUERING, Bernard, F-31850 Montrabe (FR); TEULOU, Olivier, F-31200 Toulouse (FR)
(74) Mandataire: Lebrette, Camille
(86) Numéro de dépôt international: PCT/FR2006/050841
(87) Numéro de publication internationale: WO 2007/034094

(56) Documents cités:
- US-A- 2 580 484
- US-A- 3 666 211
- US-A- 5 957 405
- US-A- 6 089 504

## Description

L'invention concerne un turboréacteur pour aéronef. Plus précisément, l'invention concerne un turboréacteur destiné à être monté en position arrière sur le fuselage d'un aéronef. L'invention concerne également un montage du turboréacteur sur un aéronef.

Un tel turboréacteur monté en position arrière sur le fuselage est connu de US - 3 666 211, qui représente l'art antérieur le plus proche pour l'objet des revendications indépendantes 1 et 8.

L'invention trouve des applications d'une manière générale dans le domaine de l'aéronautique et plus particulièrement pour les avions supersoniques, dont le diamètre de fuselage est faible.

Un aéronef comporte généralement une ou plusieurs dérives situées en partie arrière supérieure du fuselage dudit aéronef. Par exemple, un aéronef comporte une dérive verticale et deux dérives horizontales, ou uniquement deux dérives obliques par rapport à l'axe longitudinal de l'aéronef. Ces dérives sont nécessaires pour assurer la stabilité de la trajectoire de l'aéronef. Les dérives sont directement fixées à la partie arrière supérieure du fuselage.

On connaît par ailleurs des aéronefs munis d'au moins trois turboréacteurs. Chaque aile est munie, à l'endroit de l'intrados, d'au moins un turboréacteur. Un turboréacteur supplémentaire, appelé par la suite turboréacteur arrière, est situé en partie arrière du fuselage de l'aéronef au niveau de la dérive verticale arrière dudit aéronef. La dérive verticale est fixée directement sur la structure de l'aéronef, par l'intermédiaire d'arceaux semi-circulaires formant la structure porteuse de la dérive verticale. Plus précisément, la dérive verticale est reliée au niveau de son flanc gauche au flanc gauche du fuselage, par une première série d'arceaux, et au niveau de son flanc droit au flanc droit du fuselage, par une deuxième série d'arceaux. Les arceaux semi-circulaires des deux séries sont disposés par paires, de part et d'autre de la dérive, de manière à ménager un logement circulaire cylindrique dans lequel le turboréacteur arrière est glissé. Le turboréacteur arrière est ensuite lui-même directement rattaché au fuselage de l'aéronef par une deuxième structure porteuse et également aux arceaux de la dérive verticale.

Les arceaux doivent ménager un logement suffisant pour accueillir le turboréacteur arrière dans son diamètre. Plus le turboréacteur arrière est gros, plus le logement doit être important, ce qui tend à créer une traînée aérodynamique importante à l'arrière du fuselage. La traînée aérodynamique est d'autant plus importante que le diamètre du turboréacteur est grand par rapport au diamètre du fuselage en partie arrière. Par exemple, il n'est pas possible actuellement d'intégrer un turboréacteur subsonique, de gros diamètre, à l'arrière du fuselage d'un aéronef supersonique, dont le diamètre de fuselage, surtout en partie arrière, est faible, car la traînée aérodynamique créée par les structures porteuses formant le système de fixation de l'état de la technique est alors trop importante.

Par ailleurs, la dérive verticale et le turboréacteur arrière ont chacun une structure porteuse indépendante pour les relier indépendamment l'un de l'autre au fuselage de l'aéronef. Ces structures porteuses multipliées tendent à augmenter considérablement la masse totale de l'aéronef.

Un but de l'invention est donc de fournir un système de fixation d'un turboréacteur arrière en position arrière supérieure du fuselage d'un aéronef, dont l'impact sur la traînée aérodynamique est faible. Un autre but de l'invention est de fournir un tel système de fixation de masse réduite par rapport au système de fixation de l'état de la technique. Un but supplémentaire de l'invention est de faciliter le montage et l'assemblage d'un turboréacteur arrière et d'une dérive verticale en position arrière supérieure du fuselage d'un aéronef.

Pour arriver à ce résultat l'invention propose d'intégrer une ou plusieurs dérives d'un aéronef sur un moteur destiné à être monté en partie arrière supérieure du fuselage dudit aéronef. Ainsi, ce n'est plus le fuselage qui supporte les dérives mais le moteur lui-même. Le moteur et la ou les dérives fixées solidairement à la structure du moteur, forment un système intégré, ou monobloc. Ce système intégré peut ensuite être fixé en une seule fois au fuselage de l'aéronef. On diminue ainsi le nombre de structures porteuses sur la partie arrière du fuselage, puisque seul le moteur est fixé au fuselage, la ou les dérives étant uniquement reliées au fuselage par leurs fixations au moteur. En éliminant en partie les structures porteuses de la dérive autour du moteur, on diminue également la traînée aérodynamique à cet endroit. En effet, auparavant, le moteur était entouré de structures porteuses volumineuses reliant la dérive verticale à l'aéronef, ce qui augmentait l'encombrement général du module moteur/dérive.

Avantageusement, le système intégré selon l'invention comporte également un ou plusieurs des dispositifs annexes nécessaires au fonctionnement du moteur et qui sont habituellement fixés à la partie arrière du fuselage, à proximité du moteur. Par exemple, le système intégré selon l'invention comporte le dispositif de conditionnement d'air du moteur, et tout ou partie de la tuyauterie par laquelle transitent les fluides alimentant le moteur. En fixant le plus grand nombre d'équipements utiles au moteur, non plus sur le fuselage mais directement sur le moteur lui-même, on élimine d'autant le nombre de structures porteuses indépendantes autour du moteur arrière. On facilite par ailleurs le montage du moteur et des dispositifs annexes, puisqu'ils sont montés et fixés en une seule fois sur le fuselage. On diminue donc les risques d'erreurs de montage et le temps nécessaire audit montage.

Selon un exemple particulier de réalisation de l'invention, la partie arrière supérieure du fuselage, destinée à porter le système intégré selon l'invention, a une section semi-circulaire et non plus circulaire. La face supérieure de la partie arrière du fuselage forme un plateau sur lequel le système intégré selon l'invention est posé avant d'être fixé au fuselage, la face inférieure, semi-circulaire suivant le prolongement de la partie basse du fuselage. Ainsi, le moteur ne forme pas de protubérance au-dessus de la partie supérieure du fuselage, mais s'intègre au contraire dans le diamètre du fuselage, de manière à ce que ledit fuselage présente une section sensiblement circulaire continue lorsque le moteur selon l'invention est solidarisé à la partie arrière dudit fuselage.

L'invention comme définie par la revendication 1, a donc pour objet un turboréacteur pour aéronef caractérisé en ce qu'il supporte au moins une dérive, ladite dérive étant fixée sur la structure forte dudit turboréacteur de manière à former un ensemble monobloc.

Selon des exemples de réalisation du turboréacteur selon l'invention, il est possible d'ajouter toutes ou partie des caractéristiques supplémentaires suivantes consistant à :
- la dérive est fixée à la tuyère du turboréacteur.
- l'ensemble monobloc comporte au moins un dispositif annexe nécessaire au fonctionnement dudit turboréacteur, ledit dispositif annexe étant fixé sur le turboréacteur.
- la base de la dérive, fixée au turboréacteur, est ventilée par l'air de refroidissement du turboréacteur.

L'invention concerne également un aéronef comportant en partie arrière du fuselage un turboréacteur selon l'invention.

Selon des exemples de réalisation de l'aéronef selon l'invention, il est possible de prévoir tout ou partie des caractéristiques supplémentaires suivantes :
- le turboréacteur est monté en porte-à-faux sur la partie arrière du fuselage, une partie avant du turboréacteur étant fixée au fuselage.
- une partie arrière du fuselage est biseautée, de manière à ménager une plate-forme supportant le turboréacteur.

L'invention concerne aussi un procédé (revendication 8) de montage d'un turboréacteur selon l'invention sur un aéronef caractérisé en ce qu'il comporte les étapes consistant à :
- fixer au moins une dérive sur la structure du turboréacteur, de manière à former un ensemble monobloc ;
- monter et fixer l'ensemble monobloc sur la partie arrière du fuselage.

Dans un exemple particulier de réalisation du procédé de l'invention l'ensemble monobloc est monté radialement par le haut sur l'aéronef.

Selon des exemples de mise en oeuvre du procédé selon l'invention, il est possible de prévoir tout ou partie des étapes supplémentaires suivantes :
- fixer au moins un dispositif annexe, servant au fonctionnement du turboréacteur, sur ledit turboréacteur avant de monter et fixer l'ensemble monobloc sur la partie arrière du fuselage.
- monter et fixer une entrée d'air sur le fuselage, avant de monter et fixer l'ensemble modulaire monobloc, de manière à ce que l'entrée d'air soit en amont du turboréacteur.
- monter et fixer une entrée d'air sur le fuselage, après avoir monté et fixé l'ensemble modulaire monobloc, de manière à ce que l'entrée d'air soit en amont du turboréacteur.

L'invention sera mieux comprise à la lecture de la description qui suit et à l'examen des figures qui l'accompagnent. Celles-ci sont présentées à titre indicatif et nullement limitatif de l'invention. Les figures représentent :
- figure 1 : une coupe longitudinale d'une partie arrière d'un fuselage munie d'un turboréacteur selon l'invention ;
- figure 2 : une représentation schématique d'une partie arrière d'un fuselage munie d'un turboréacteur selon l'invention ;

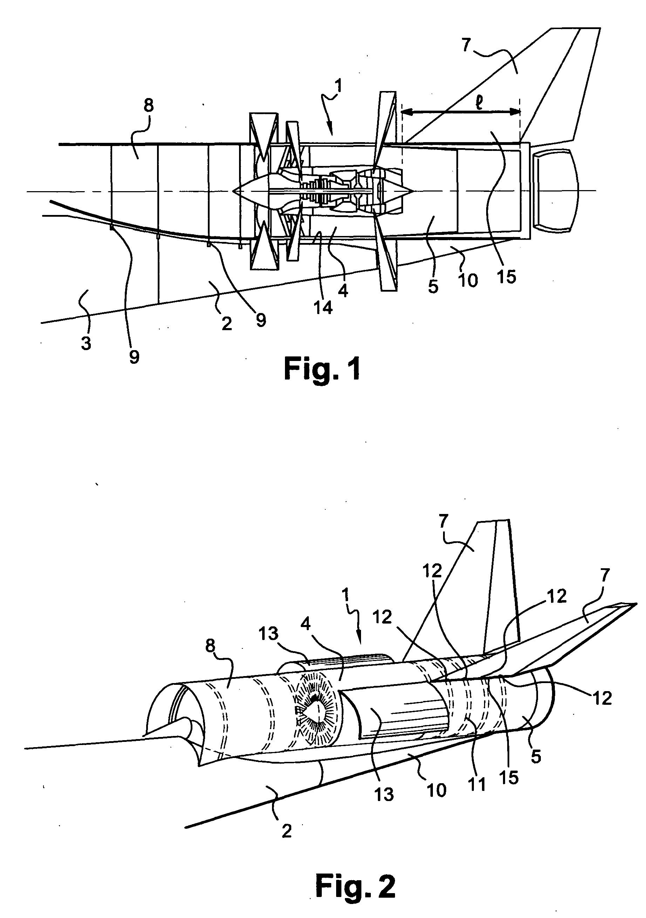

Sur la figure 1 est représenté un turboréacteur 1 monté sur une partie arrière 2 d'un fuselage 3 d'aéronef. D'une manière générale, par avant et arrière, on entend par rapport au sens d'avancement de l'aéronef muni du turboréacteur 1.

Le turboréacteur 1 est monté en porte-à-faux sur la partie arrière 2 du fuselage 3. Une partie avant 4 du turboréacteur 1 est fixée solidairement à la partie arrière 2 du fuselage 3, tandis qu'une partie arrière 5 dudit turboréacteur 1 s'étend dans le prolongement du fuselage 3, au-delà de la partie arrière 2. La partie avant 4 du turboréacteur 1 peut être munie de points d'attache reliant ladite partie avant 4 du turboréacteur 1 au fuselage 3. La partie arrière 5, ou tuyère, du turboréacteur 1 n'est pas fixée au fuselage 3. Dans un autre exemple de réalisation, il est possible de monter le turboréacteur 1 sur le fuselage 3 de manière à ce que et la partie avant 4 et la partie arrière 5 soient supportées par la partie arrière 2 du fuselage 3 et éventuellement que la partie arrière 5 soit également fixée sur le fuselage 3.

La partie arrière 5 du turboréacteur 1 supporte une dérive 7 verticale, c'est-à-dire qui s'étend verticalement par rapport à l'axe longitudinal du turboréacteur 1. Une base 15 de la dérive 7 verticale est fixée sur la partie arrière 5 du turboréacteur 1. Il n'existe aucun point d'attache entre la dérive 7 verticale et le fuselage 3. La dérive 7 est maintenue sur le fuselage 3 uniquement par sa liaison avec la partie arrière 5 du turboréacteur 1. Ainsi le turboréacteur 1 et la dérive 7 forment un ensemble monobloc qui est lui-même fixé au fuselage 3 d'un aéronef par des points d'attache reliant la partie avant 4 du turboréacteur 1 à la partie arrière 2 du fuselage 3.

Une entrée d'air 8 est disposée en amont de la partie avant 4 du turboréacteur 1 de manière à permettre à de l'air de rentrer dans le turboréacteur 1. L'entrée d'air 8 est indépendante du turboréacteur 1, c'est-à-dire qu'elle est fixée au fuselage 3 indépendamment dudit turboréacteur 1 par des points d'ancrage 9. L'entrée d'air 8 permet de guider un flux d'air depuis l'extérieur jusqu'à l'intérieur du turboréacteur 1.

Dans l'exemple représenté à la figure 1, la partie arrière 2 du fuselage 3 est munie d'une pointe arrière 10 assurant la continuité aérodynamique du fuselage 3. La pointe arrière 10 est un carénage qui n'assure aucune fonction structurale du fuselage 3, mais a une fonction purement aérodynamique. Le turboréacteur 1 n'a aucune liaison physique avec la pointe arrière 10 du fuselage 3.

Comme cela est visible sur la figure 1, la partie arrière 2 du fuselage 3 est biseautée de manière à former une plate-forme 14 plane, sur laquelle la partie avant 4 du turboréacteur 1 est posée. Ainsi, la partie arrière 2 du fuselage 3 a une section en demi-cercle, terminée par un plat destiné à recevoir le turboréacteur 1: Plus précisément, la partie inférieure de la partie arrière 2 du fuselage 3 a une forme en arc de cercle, tandis que la partie supérieure est plane. Le diamètre du fuselage 3 au niveau de la partie arrière 2 est strictement inférieur au diamètre du fuselage 3 au-devant de la partie arrière 2. Le turboréacteur 1 ne forme donc pas de protubérance trop importante au-dessus de la partie arrière 2 du fuselage 3, puisqu'il est au moins en partie intégré dans le diamètre dudit fuselage 3. La traînée aérodynamique, due à la présence de ce turboréacteur 1 arrière, est donc faible.

Sur la figure 2 on peut voir une vue de côté du turboréacteur 1 selon l'invention.

Le turboréacteur 1 porte deux dérives 7 obliques. Par oblique, on entend par rapport à l'axe longitudinal du turboréacteur 1. Chaque dérive 7 est fixée solidairement sur la structure forte du turboréacteur 1 au niveau de la partie arrière 5 dudit turboréacteur 1. Dans l'exemple représenté à la figure 2, chaque dérive 7 est fixée par sa base 15, en quatre points d'ancrage 12, à la partie arrière 5 du turboréacteur 1. Plus précisément, la structure forte de la partie arrière 5 du turboréacteur 1 comporte quatre arceaux 11 suivant un contour circulaire cylindrique de ladite partie arrière 5. Chaque arceau 11 sert de point d'ancrage 12 à un longeron interne (non visible) d'une dérive 7. Ainsi chaque dérive 7 est fixée sur toute une largeur l à la partie arrière 5 du turboréacteur 1. Par largeur, on entend la dimension de la dérive 7 parallèlement à l'axe longitudinal du turboréacteur. Bien entendu, il est possible de prévoir un nombre plus important ou moins important de points d'attache 12 des dérives 7 aux arceaux 11. Par exemple, il est possible de relier une dérive 7 par seulement deux points d'attache 12 au turboréacteur 1. Dans ce cas, préférentiellement, les points d'attache 12 sont situés aux deux extrémités de la largeur l de la dérive 7.

La partie avant 4 du turboréacteur 1 comporte par ailleurs deux capots 13 respectivement droit et gauche. Chaque capot 13 suit un contour en arc de cercle d'un flanc droit ou gauche de la partie avant 4 du turboréacteur 1. Dans l'exemple représenté à la figure 2, les capots 13 sont des capots mobiles, en ce sens que lesdits capots 13 peuvent s'ouvrir de manière à permettre un accès à l'intérieur du turboréacteur 1. Un rebord supérieur de chaque capot 13 est solidaire de la partie avant 4 supérieure du turboréacteur 1, tandis qu'un rebord inférieur est libre. Par inférieur, on entend dirigé vers le fuselage 3. Par supérieur, on entend dirigé vers le haut, par opposition à inférieur. Le rebord supérieur est par exemple monté pivotant, de manière à ce que chaque capot 13 puisse pivoter depuis une position fermée dans laquelle il s'étend dans le prolongement du turboréacteur 1, jusqu'à une position ouverte dans laquelle il s'étend perpendiculairement à l'axe longitudinal du turboréacteur 1. Les capots 13 permettent d'accéder à l'intérieur du turboréacteur 1 et à certains des dispositifs annexes nécessaires au fonctionnement dudit turboréacteur 1.

Un ou plusieurs des dispositifs annexes nécessaires au fonctionnement du turboréacteur 1 peuvent être fixés directement au turboréacteur 1. Ainsi, ils forment avec le turboréacteur 1 et la ou les dérives 7, un ensemble monobloc 1, 7. C'est cet ensemble monobloc 1, 7 qui est fixé la partie arrière 2 du fuselage 3 de l'aéronef. Plus précisément, seule la partie avant 4 du turboréacteur 1 de l'ensemble monobloc 1, 7 est fixée au fuselage 3, les autres éléments étant reliés audit fuselage 3 par l'intermédiaire du turboréacteur 1 auquel ils sont fixés individuellement. Il est également possible que deux ou plusieurs dispositifs annexes soient solidarisés les uns aux autres pour former un ensemble modulaire, ledit ensemble modulaire étant ensuite fixé en une seule fois au turboréacteur 1.

Avec le turboréacteur 1 selon l'invention, la technique de montage dudit turboréacteur 1 sur la partie arrière 2 du fuselage 3 d'un aéronef est complètement modifiée par rapport à l'état de la technique.

En effet, on commence par fixer l'ensemble des éléments annexes, comportant la ou les dérives 7, et éventuellement tout ou partie des dispositifs annexes nécessaires au fonctionnement du turboréacteur 1, sur ledit turboréacteur 1. Les éléments annexes sont fixés solidairement à la partie arrière 5 et/ou à la partie avant 4 du turboréacteur 1. Une fois l'ensemble monobloc comportant le turboréacteur 1, la ou les dérives 7 et les éventuels dispositifs annexes formé, on amène ledit ensemble monobloc 1, 7 sur le fuselage 3. L'intégration du turboréacteur 1 sur le fuselage 3 ne se fait plus de manière axiale, parallèlement à l'axe longitudinal du turboréacteur 1, mais de manière radiale, c'est-à-dire perpendiculairement à l'axe longitudinal du turboréacteur 1. L'ensemble monobloc 1, 7 est amené au-dessus de la partie arrière 2 du fuselage 3, par exemple au moyen d'une grue, puis est descendu en direction du fuselage 3 jusqu'à ce qu'il repose sur ladite partie arrière 2 du fuselage 3.

L'intégration du turboréacteur 1 selon l'invention sur la partie arrière 2 du fuselage 3 d'un aéronef est donc beaucoup plus aisée que dans l'état de la technique. En effet, dans l'état de la technique, il était nécessaire de dégager la place suffisante pour introduire par translation le turboréacteur 1 dans son logement ménagé par les arceaux reliant les dérives à la structure du fuselage. De plus, du fait de cette translation, il n'est pas possible, avec le système de fixation de l'état de la technique de disposer le turboréacteur dans le diamètre du fuselage, le turboréacteur formant obligatoirement une protubérance à l'arrière du fuselage.

L'entrée d'air 8, indépendante de l'ensemble monobloc 1, 7 peut être indifféremment amenée sur le fuselage 3 avant ou après ledit ensemble monobloc 1, 7. L'entrée d'air 8 peut être amenée radialement, par translation, ou autre sur le fuselage 3, dans la mesure où aucun obstacle ne gêne son approche.

Un des inconvénients de la fixation d'une dérive 7 directement sur la structure forte du turboréacteur 1 est le risque de surchauffe et de fonte de ladite dérive 7 au niveau de la liaison entre la dérive 7 et le turboréacteur 1. En effet, la base 15 de la dérive 7 étant solidaire de la partie arrière 5 du turboréacteur 1, elle est en contact direct et permanent avec une source de chaleur pouvant monter à des températures avoisinant les 800°C. Aussi, pour éviter les inconvénients dus à la surchauffe, et notamment la fonte des points d'attache 12 ou des matériaux formant la dérive 7, il est possible de prévoir un mécanisme de ventilation permettant de ventiler la base 15 de la dérive 7. Avantageusement, ce système de ventilation utilise l'air de refroidissement du turboréacteur 1. Préférentiellement, au moins la base 15 de la dérive 7 et les points d'attache 12 à la partie arrière 5 du turboréacteur 1 sont réalisés dans des matériaux résistants aux fortes températures, telles que par exemple le titane. Il est également possible de réaliser la dérive 7 en matériaux composites, au moins pour la partie supérieure, non reliée au turboréacteur 1.

## Revendications

1. Turboréacteur (1) pour aéronef **caractérisé en ce qu'**il supporte au moins une dérive (7), ladite dérive étant fixée sur la structure forte (11) dudit turboréacteur de manière à former un ensemble monobloc.

2. Turboréacteur selon la revendication 1, **caractérisé en ce que** la dérive est fixée à la tuyère (5) du turboréacteur.

3. Turboréacteur selon l'une des revendications 1 à 2, **caractérisé en que** l'ensemble monobloc comporte au moins un dispositif annexe nécessaire au fonctionnement dudit turboréacteur, ledit dispositif annexe étant fixé sur le turboréacteur.

4. Turboréacteur selon l'une des revendications 1 à 3, **caractérisé en ce que** la base (15) de la dérive, fixée au turboréacteur, est ventilée par l'air de refroidissement du turboréacteur.

5. Aéronef comportant en partie arrière (2) du fuselage (3) un turboréacteur (1) selon l'une des revendications 1 à 4.

6. Aéronef selon la revendication 5, **caractérisé en ce que** le turboréacteur est monté en porte-à-faux sur la partie arrière du fuselage, une partie avant (4) du turboréacteur étant fixée au fuselage.

7. Aéronef selon l'une des revendications 5 à 6, **caractérisé en ce que** la partie arrière du fuselage est biseautée, de manière à ménager une plate-forme (14) supportant le turboréacteur.

8. Procédé de montage d'un turboréacteur (1) selon l'une des revendications 1 à 4 sur un aéronef, **caractérisé en ce qu'**il comporte les étapes consistant à :
- fixer au moins une dérive (7) sur la structure (11) du turboréacteur, de manière à former un ensemble monobloc (7, 1) ;
- monter et fixer l'ensemble monobloc sur la partie arrière (2) du fuselage.

9. Procédé selon la revendication 8, **caractérisé en ce que** l'ensemble monobloc est monté radialement par le haut sur l'aéronef.

10. Procédé selon l'une des revendications 8 à 9, **caractérisé en ce qu'**il comporte l'étape supplémentaire consistant à
- fixer au moins un dispositif annexe servant au fonctionnement du turboréacteur sur ledit turboréacteur avant de monter et fixer l'ensemble monobloc sur la partie arrière du fuselage.

11. Procédé selon l'une des revendications 8 à 10, **caractérisé en ce qu'**il comporte l'étape supplémentaire consistant à
- monter et fixer une entrée d'air (8) sur le fuselage, avant de monter et fixer l'ensemble monobloc, de manière à ce que l'entrée d'air soit en amont du turboréacteur.

12. Procédé selon l'une des revendications 8 à 10, **caractérisé en ce qu'**il comporte l'étape supplémentaire consistant à
- monter et fixer une entrée d'air (8) sur le fuselage, après avoir monté et fixé l'ensemble modulaire monobloc, de manière à ce que l'entrée d'air soit en amont du turboréacteur.

## Claims

1. A turbojet (1) for aircraft **characterised in that** it supports at least one tail fin (7), said tail fin being fixed on the strong structure (11) of said turbojet so as to form a single-unit assembly.

2. A turbojet according to claim 1, **characterised in that** the tail fin is fixed to the tuyere (5) of the turbojet.

3. A turbojet according to one of claims 1 to 2, **characterised in that** the single-unit assembly comprises at least one annexe device required for the operation of said turbojet, said annexe device being fixed on the turbojet.

4. A turbojet according to one of claims 1 to 3, **characterised in that** the base (15) of the tail fin, fixed to the turbojet, is ventilated by the cooling air of the turbojet.

5. An aircraft comprising a turbojet (1) on the rear section (2) of the fuselage (3) according to one of claims 1 to 4.

6. An aircraft according to claim 5, **characterised in that** the turbojet is cantilevered on the rear section of the fuselage, a front section (4) of the turbojet being fixed to the fuselage.

7. An aircraft according to one of claims 5 to 6, **characterised in that** the rear section of the fuselage is bevelled, so as to create a platform (14) supporting the turbojet.

8. A method of mounting a turbojet (1) according to one of claims 1 to 4 on an aircraft, **characterised in that** it comprises the steps consisting of:
- fixing at least one fin tail (7) on the structure (11) of the turbojet, so as to form a single-unit assembly (7,1);
- mounting and fixing the single-unit assembly on the rear section (2) of the fuselage.

9. A method according to claim 8, **characterised in that** the single-unit assembly is mounted radially on the top of the aircraft.

10. A method according to one of claims 8 to 9, **characterised in that** it comprises the additional step consisting of:
- fixing at least one annexe device for the operation of the turbojet on said turbojet before mounting and fixing the single-unit assembly on the rear section of the fuselage.

11. A method according to one of claims 8 to 10, **characterised in that** it comprises the additional step consisting of
- mounting and fixing an air entry (8) on the fuselage, before mounting and fixing the single-unit assembly, so as the air entry is upstream of the turbojet.

12. A method according to one of claims 8 to 10, **characterised in that** it comprises the additional step consisting of
- mounting and fixing an air entry (8) on the fuselage, after having mounted and fixed the modular single-unit assembly, so as the air entry is upstream of the turbojet.

## Patentansprüche

1. Turbojet (1) für Flugzeug, **dadurch gekennzeichnet, dass** er zumindest ein Seitenleitwerk (7) trägt, wobei das besagte Seitenleitwerk auf der starken Struktur (11) des besagten Turbojets befestigt ist, sodass sich **dadurch** eine Einheit au seinem Stück bildet.

2. Turbojet nach Anspruch 1, **dadurch gekennzeichnet, dass** das Seitenleitwerk an der Düse (5) des Turbojets befestigt ist.

3. Turbojet nach einem der Ansprüche 1 bis 2, **dadurch gekennzeichnet, dass** die Einheit au seinem Stück zumindest eine nötige Anbauvorrichtung für den Betrieb des besagten Turbojets enthält, wobei die besagte Anbauvorrichtung auf dem Turbojet befestigt ist.

4. Turbojet nach einem der Ansprüche 1 bis 3, **dadurch gekennzeichnet, dass** die Basis (15) des Seitenleitwerks, die auf dem Turbojet befestigt ist, von der Kühlluft des Turbojets belüftet wird.

5. Flugzeug, das am rückwärtigen Abschnitt (2) des Flugzeugrumpfes einen Turbojet (1) nach einem der Ansprüche 1 bis 4 enthält.

6. Flugzeug nach Anspruch 5, **dadurch gekennzeichnet, dass** der Turbojet überstehend am rückwärtigen Abschnitt des Flugzeugrumpfes montiert ist, wobei ein vorderer Abschnitt (4) des Turbojets am Flugzeugrumpf befestigt ist.

7. Flugzeug nach einem der Ansprüche 5 bis 6, **dadurch gekennzeichnet, dass** der rückwärtige Abschnitt des Flugzeugrumpfes so abgeschrägt ist, dass eine Plattform (14) entsteht, die den Turbojet trägt.

8. Verfahren zur Montage eines Turbojets (1) nach einem der Ansprüche 1 bis 4 auf einem Flugzeug, **dadurch gekennzeichnet, dass** es aus Schritten besteht, die folgendes beinhalten:
- das Befestigen zumindest eines Seitenleitwerks (7) auf der Struktur (11) des Turbojets, sodass sich eine Einheit au seinem Stück (7, 1) bildet;
- die Montage und Befestigung der Einheit aus einem Stück auf dem rückwärtigen Abschnitt (2) des Flugzeugrumpfes.

9. Verfahren nach Anspruch 8, **dadurch gekennzeichnet, dass** die Einheit aus einem Stück radial von oben her auf dem Flugzeug befestigt wird.

10. Verfahren nach einem der Ansprüche 8 bis 9, **dadurch gekennzeichnet, dass** es den zusätzlichen Schritt enthält der darin besteht,
- zumindest eine Anbauvorrichtung, die zum Betrieb des Turbojets dient, auf dem besagten Turbojet zu befestigen, bevor die Einheit aus einem Stück auf dem rückwärtigen Abschnitt des Flugzeugrumpfes montiert und befestigt wird.

11. Verfahren nach einem der Ansprüche 8 bis 10, **dadurch gekennzeichnet, dass** es den zusätzlichen Schritt enthält der darin besteht,
- einen Lufteinlass (8) auf dem Flugzeugrumpf zu montieren und zu befestigen, bevor die Einheit aus einem Stück montiert und befestigt wird, sodass sich der Lufteinlass vor dem Turbojet befindet.

12. Verfahren nach einem der Ansprüche 8 bis 10, **dadurch gekennzeichnet, dass** es den zusätzlichen Schritt enthält der darin besteht,
- einen Lufteinlass (8) auf dem Flugzeugrumpf zu montieren und zu befestigen, nachdem die modulare Einheit aus einem Stück montiert und befestigt wird, sodass sich der Lufteinlass vor dem Turbojet befindet.
